# EUROPEAN PATENT APPLICATION

(11) **EP 2 299 535 A1**
(43) Date of publication of application: **23.03.2011**
(21) Application number: 09827368.3
(22) Date of filing: 19.11.2009
(51) Int. Cl.: H01M 10/50, H01M 2/10

(54) **BATTERY PACK**

(30) Priority: 21.11.2008 JP 2008298419
(71) Applicant: Panasonic Corporation, Kadoma-shi Osaka 571-8501 (JP)
(72) Inventor: NAGASAKI, Akira, 1-61 Shiromi 2-chome, Chuo-ku, Osaka-shi, Osaka 540-6207 (JP); MARUBAYASHI, Norio, 1-61 Shiromi 2-chome, Chuo-ku, Osaka-shi, Osaka 540-6207 (JP); NISHINO, Hajime, 1-61 Shiromi 2-chome, Chuo-ku, Osaka-shi, Osaka 540-6207 (JP); HIRAKAWA, Yasushi, 1-61 Shiromi 2-chome, Chuo-ku, Osaka-shi, Osaka 540-6207 (JP)
(74) Representative: TBK-Patent
(86) International application number: PCT/JP2009/006240
(87) International publication number: WO 2010/058587

(57) **Abstract**

A battery pack of the present invention includes: a battery assembly including a plurality of batteries having a sealed portion, the plurality of batteries being connected to each other; a terminal portion electrically connected to the battery assembly and outputting electric power; and a composite layer structure including a heat-absorbing layer and a heat-conductive layer layered on the heat-absorbing layer, the composite layer structure being arranged at least at a part of a periphery of the battery assembly. The heat-absorbing layer has a specific heat of 1,000 J/kg·°C or more. The heat-conductive layer has a heat conductivity of 10 W/m·K or more. This configuration allows for a small, light, and highly safe battery pack that is free from battery pack damage even when a battery in the battery pack has trouble and emits a high-temperature inflammable gas to expose the inside of the battery pack to a high-temperature environment.

## Description

### [Technical Field]

The present invention relates to a battery pack that can ensure safety even in case of battery trouble.

### [Background Art]

In recent years, along with diversification of electronic devices, there has been a growing demand for batteries and battery packs having a high capacity, a high voltage, a high output, and a high safety. In order to ensure high safety of batteries and battery packs, for example, batteries are provided with PTC (Positive temperature coefficient) elements and temperature fuses for preventing an increase of battery temperature, and further protective means for sensing internal pressure of batteries and cutting off electric current. Also, battery packs are provided with a safety circuit for preventing battery trouble.

However, even if the batteries have such protective means as above, there is a possibility that a high-temperature and high-pressure inflammable gas spouts out from the inside of the batteries in case the batteries are subjected to abnormal conditions. At that time, a case of a battery pack housing the batteries is exposed to an abnormally high temperature environment and is melted, which may cause damage to a part of the case and leakage of a high-temperature inflammable gas to the outside of the battery pack.

As measures to cope with the above problem, use of metals having favorable flame resistance or low-inflammable resins as the case material has been proposed to prevent damage to the case caused by a high-temperature inflammable gas emitted from the batteries to the outside (Patent Literature 1). Also, use of resin materials having superior heat conductivity as the case material has been proposed for facilitating emission of heat inside the case (Patent Literature 2).

### [Citation List]

### [Patent Literature]

[PTL 1] Japanese Laid-Open Patent Publication No. 2001-229982
[PTL2] Japanese Laid-Open Patent Publication No. 2002-304974

### [Summary of Invention]

### [Technical Problem]

However, as disclosed in Patent Literature 2, even if the case material is a resin material having high heat conductivity, when a high-temperature inflammable gas spouts out from the inside of the batteries, the case is exposed to an abnormally high-temperature environment and may be damaged. Also, as disclosed in Patent Literature 1, when the case material is a metal, the thickness of the case should be increased in order to prevent damage to the case by a high-temperature inflammable gas. Thus, it is difficult to realize small and light battery packs.

Therefore, in order to solve the conventional problem as above, the present invention has an object to provide a small, light, and highly safe battery pack that is free from battery pack damage even when a battery in the battery pack has trouble and emits a high-temperature inflammable gas to expose the inside of the battery pack to an abnormally high-temperature environment.

### [Solution to Problem]

An aspect of a battery pack according to the present invention comprises:
a battery assembly comprising a plurality of batteries having a sealing portion, the plurality of batteries being electrically connected to each other;
a terminal portion electrically connected to the battery assembly and outputting electric power; and
a composite layer structure induding a heat-absorbing layer and a heat-conductive layer layered on the heat-absorbing layer, the composite layer structure being arranged at least at a part of a periphery of the battery assembly,
wherein the heat-absorbing layer has a specific heat of 1,000 J/kg·°C or more, and
the heat-conductive layer has a heat conductivity of 10 W/m·K or more.

The composite layer structure is preferably formed at least at a portion facing the sealing portion of each battery.

It is preferable that one of the heat-conductive layer and the heat-absorbing layer forms a case housing the battery assembly, and the other one of the heat-conductive layer and the heat-absorbing layer forms a coating portion of the case at least at a portion facing the sealing portion of each battery.

The heat-absorbing layer preferably includes a resin material, ceramics, or an inorganic material having a specific heat of 1,000 Jkg·°C or more.
The resin material is preferably a fluorocarbon resin, magnesium hydroxide-containing polypropylene resin, or a modified polyphenylene ether resin.

The heat-absorbing layer preferably includes a material A having a property of vaporizing at 80°C or more and absorbing heat by latent heat.
The material A is preferably butyl rubber or water-containing gel.

The heat-absorbing layer preferably indudes a material having a property of decomposing at 100°C or more and absorbing heat.
The material B is preferably sodium hydrogen carbonate.
The heat-conductive layer is preferably formed of a metal.
The metal is preferably copper or aluminum.

The battery pack preferably indudes a mechanism for discharging a high-temperature gas emitted from the batteries to the outside of the battery pack, and the mechanism preferably includes an opening portion arranged in the battery pack, a check valve arranged in the opening portion, and a conduit communicating with the opening portion and cooling and discharging the high-temperature gas outside.

### [Advantageous Effects of invention]

According to the present invention, it is possible to provide a small, light, and highly safe battery pack that is free from battery pack damage even when a battery in the battery pack has trouble and emits a high-temperature inflammable gas to expose the inside of the battery pack to an abnormally high-temperature environment.

### [Brief Description of Drawing]

[Fig. 1] A perspective view of a battery pack in accordance with an embodiment of the present invention.
[Fig. 2] An exploded perspective view of the battery pack of Fig. 1.
[Fig. 3] A perspective view of a battery assembly of Fig. 2.
[Fig. 4] A perspective view illustrating a modified example of a conduit used in the battery pack of Fig. 1.

### [Description of Embodiments]

An aspect of the present invention includes: a battery assembly comprising a plurality of batteries having a sealing portion, the plurality of batteries being electrically connected to each other; a terminal portion electrically connected to the battery assembly and outputting electric power, and a composite layer structure induding a heat-absorbing layer and a heat-conductive layer layered on the heat-absorbing layer, the composite layer structure being arranged at least at a part of a periphery of the battery assembly.

Therefore, since the battery pack has a heat-absorbing layer, a partial and abnormal temperature increase caused by the heat of an emitted inflammable gas is suppressed even when a battery emits a high-temperature inflammable gas due to a significant increase of battery temperature and the case inside the battery pack is partially exposed to an abnormally high-temperature environment with the high-temperature inflammable gas. Further, since the battery pack has a heat-conductive layer, partially increased temperature by the heat of the emitted inflammable gas can be diffused. Consequently, it is possible to prevent damage to the battery pack (case) caused by the fact that the inside of the battery pack is exposed to an abnormally high-temperature environment, as well as leakage of the inflammable gas to the outside of the battery pack caused thereby, achieving improved safety of the battery pack.

Herein, the heat-conductive layer refers to a layer having a heat conductivity of 10 W/m·K or more. The heat-conductive layer has preferably a heat conductivity of 400 W/m·K or less. For example, copper having superior heat conductivity among metals has a heat conductivity of 398 W/m·K. Further, in order to diffuse effectively the heat produced intensively, it is more preferable that the heat-conductive layer has a heat conductivity of 50 to 200 W/m·K.

Herein, the heat-absorbing layer is a layer formed of a material having high heat capacity and having a specific heat (apparent specific heat) of 1,000 J/kg·°C or more due to heat absorption by heat decomposition reaction or latent heat by melting. The heat-absorbing layer has preferably a specific heat of 5,000 J/kg·°C or less. For example, water has a relatively high specific heat of 4,200 J/kg·°C. Further, in order to absorb heat more effectively, it is more preferable that the heat-absorbing layer has a specific heat of 2,000 to 4,500 J/kg·°C.

The composite layer formed of two layers of the heat-conductive layer and the heat-absorbing layer has a thickness of 0.2 to 4 mm, for example. The heat-conductive layer has a thickness of 0.01 to 3 mm, for example. The heat-absorbing layer has a thickness of 0.1 to 3 mm or more. In order to diffuse effectively the heat of the inflammable gas emitted from the batteries, it is preferable to cover at least 30% of the periphery of the battery assembly with the heat-conductive layer.

As the heat-conductive layer, metals that are noninflammable materials such as iron, nickel, aluminum, titanium, copper, and stainless steel, or resins having high heat conductivity such as engineering plastic are used. Among the above metals, copper and aluminum are preferable. Examples of the engineering plastic include polyphenylene sulfide (PPS).

Preferable materials for forming the heat-absorbing layer are resin materials, ceramics, or inorganic materials having a property of absorbing heat. Examples of the above resin materials include noninflammable resins such as fluorocarbon resins, low-inflammable resins such as magnesium hydroxide-containing polypropylene resin and modified polyphenylene ether resin (modified PPE resin), and heat-resistant resins such as wholly aromatic liquid crystal polyester, polyether sulfone, and aromatic polyamide.
The modified PPE resin is a polymer alloy mainly composed of an aromatic polyether resin (PPE resin) having an ether group with a synthetic resin of a styrene-base resin such as polystyrene (PS).
Examples of the fluorocarbon resins indude polytetrafluoroethylene (PTFE) having a superior heat resistance.
The magnesium hydroxide-containing polypropylene resin preferably indudes 50 to 160 parts by weight of magnesium hydroxide per 100 parts by weight of polypropylene resin because the specific heat can be increased to the limit up to which resin forming is possible.
Examples of the above ceramics indude heat-resistant glass and alumina. Examples of the above inorganic materials indude noninflammable materials such as carbon.

In a preferred embodiment, the heat-absorbing layer indudes a material having a property of vaporizing at a high temperature of 80°C or more and absorbing heat by latent heat (e.g. butyl rubber, water-containing gel).
As the water-containing gel, HEAT BUSTER TK2 manufactured by PDM Co., Ltd. is used, for example.
In another preferred embodiment, the heat-absorbing layer preferably indudes a material having a property of decomposing at a high temperature of 100°C or more and absorbing heat (e.g. sodium hydrogen carbonate, aluminum hydroxide).

The above composite layer may further indude a layer other than the heat-conductive layer and the heat-absorbing layer. For example, it is possible to arrange, between the heat-conductive layer and the heat-absorbing layer, an adhesive layer (e.g. having a thickness of 0.2 to 1.0 mm) for adhering the heat-conductive layer to the heat-absorbing layer, as necessary. As the adhesive material used for the adhesive layer, an epoxy resin-base adhesive or an acrylic resin-base adhesive is used. For example, an UV-curable adhesive (trade name "OPTOCAST") manufactured by EMI, or "Araldite Standard" (trade name) manufactured by Huntsman Advanced Materials GmbH is used. The adhesive layer may be formed of a material having a high adhesive property to the heat-conductive layer and the heat-absorbing layer and not preventing effects of these layers. Also, the adhesive layer may also serve as the heat-conductive layer or the heat-absorbing layer. In the case where the heat-conductive layer or the heat-absorbing layer indudes a resin having an adhesive property, it is not necessary to arrange the adhesive layer. The heat-conductive layer and the heat-absorbing layer may be composed of one layer, or two or more layers, respectively.

Since the high-temperature inflammable gas is discharged from the sealing portion of each battery, the composite layer structure should be formed at least at a portion facing the sealing portion of each battery.
In a first preferred embodiment of the present invention, the case housing the battery assembly has the heat-conductive layer and the heat-absorbing layer, and the composite layer structure is formed at least at a portion facing the sealing portion of each battery.
In a second preferred embodiment of the present invention, one of the heat-conductive layer and the heat-absorbing layer forms a case housing the battery assembly, and the other one of the heat-conductive layer and the heat-absorbing layer forms a case coating portion at least at a portion facing the sealing portion of each battery.
By combining the heat-conductive layer with the heat-absorbing layer, the thickness of the case can be thinner, enabling realization of a small and light battery pack.

The composite layer structure may be formed by forming beforehand the case coating portion on an inner face of the case, or may be formed by covering the battery assembly with the case coating portion and housing the battery assembly covered with the case coating portion in the case.
In the case of forming the composite layer structure with the case and the case coating portion, it is possible to change easily the configuration of the composite layer structure according to the composition of the battery assembly, and the size and the type of the batteries constituting the battery assembly. For example, the location and the surface area for arranging the composite layer structure can be changed easily by changing the location and the configuration of the case coating portion without changing the case.

Further, in the plurality of batteries constituting the battery assembly, it is possible to arrange partition plates induding the heat-conductive layer or the heat-absorbing layer between the adjacent batteries to form a structure where the partition plates can be fitted into the case. For example, it is possible to fit the partition plates into recessed portions formed in the case, thereby forming the composite layer induding the heat-absorbing layer and the heat-conductive layer with the partition plates and the case at the fitted portions.

The battery pack is used in electronic devices such as portable personal computers and video cameras, for example. Also, the battery pack may be used as a power source for electric devices loaded on vehicles such as four-wheeled and two-wheeled vehicles, or a power source for driving electric cars and hybrid cars. As the batteries, secondary batteries such as lithium ion secondary batteries and nickel-metal hydride storage batteries are used, for example.
The plurality of batteries constituting the battery assembly is connected in series or in parallel. For example, the battery assembly may be constituted by batteries connected in series only, or the battery assembly may be constituted by connecting in parallel two or more battery groups connected in series.

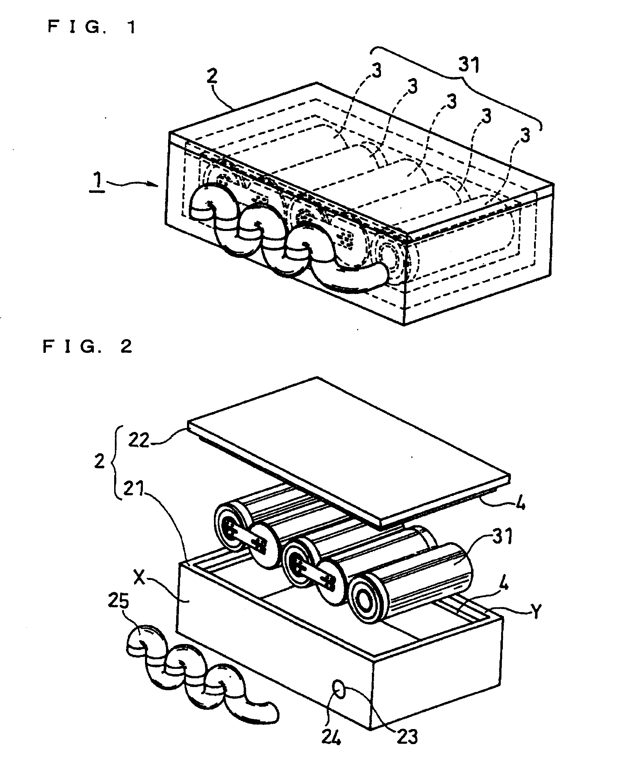

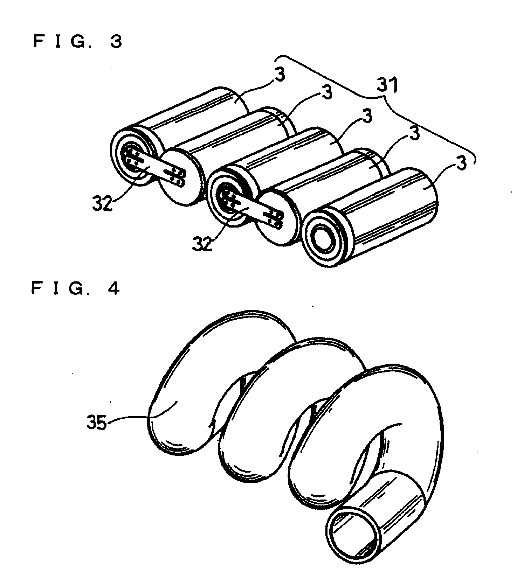

In the following, an embodiment in accordance with the present invention will be described with reference to drawings. Fig. 1 is a perspective view of a battery pack 1 in accordance with an embodiment of the present invention. Fig. 2 is an exploded perspective view of the battery pack of Fig. 1. Fig. 3 is a perspective view of a battery assembly 31 used in the battery pack 1 of Fig. 1.
As illustrated in Figs. 1 and 2, the battery pack 1 indudes a battery assembly 31 consisting of five cylindrical batteries 3 electrically connected in series, and a cuboid case 2 housing the battery assembly 31. In each cylindrical battery 3, one of an end face of the positive electrode terminal side and an end face of the negative electrode terminal side serves as a sealing portion.
As illustrated in Fig. 3, five batteries 3 constituting the battery assembly 31 are arranged in parallel with alternated directions of the positive electrode terminals and the negative electrode terminals. In the five batteries 3, the positive electrode terminals are connected with the adjacent negative electrode terminals by connection plates 32, thereby connecting the five batteries in series. The case 2 has a terminal portion (not illustrated) capable of outputting electric power, and the battery assembly 31 is electrically connected with the terminal portion via a connection lead (not illustrated).

As the batteries 3, for example cylindrical lithium ion secondary batteries of 26650 size are used. In these lithium ion secondary batteries, the end face of the positive electrode terminal side serves as a sealing portion. The lithium ion secondary batteries have a power generating portion induding a positive electrode plate, a negative electrode plate, and a separator arranged between the positive electrode plate and the negative electrode plate. The positive electrode plate has a positive electrode current collector and a layer that is formed on the positive electrode current collector and that indudes a positive electrode active material capable of absorbing and desorbing lithium. As the positive electrode active material, lithium-containing composite oxides such as LiCoO₂ and LiNiO₂ are used, for example. Among the lithium-containing composite oxides, preferable is a lithium-containing composite oxide where a part of Co is replaced with a different element in LiCoO₂. By the different element, a favorable coating film is formed on the surface of the active material under a high-voftage condition. Thus, the charge end voltage can be set high.
More specifically, preferable is a lithium-containing composite oxide represented by the general formula:

LiₐM_{b}Ni_{c}CO_{d}Oₑ,

wherein M is at least one metal selected from the group consisting of Al, Mn, Sn, In, Fe, Cu, Mg, Ti, Zn, and Mo, 0<a<1.3, 0.02≤b≤0.5, 0.02≤d/c+d≤0.9, 1.8<e<2.2, b+c+d=1, and 0.34<c. In particles of the lithium-containing composite oxide represented by the general formula, element M is preferably distributed more on the surface portion of the particles than in the inside of the particles.
The positive electrode current collector is made of a metal foil such as aluminum foil, for example.

The negative electrode plate has a negative electrode current collector and a layer that is formed on the negative electrode current collector and that indudes a negative electrode active material capable of reversibly absorbing and desorbing lithium.
Examples of the negative electrode active material indude carbon materials, metallic lithium, lithium-containing composite oxides, and materials capable of forming an alloy with lithium. Examples of the carbon materials indude coke, cracked carbons, natural graphite, artificial graphite, mesocarbon microbeads, graphitized mesophase spheres, vapor-deposited carbons, vitreous carbons, carbon fibers (polyacrylonitrile-base, pitch-base, cellulose-base, vapor- deposited carbon-base), amorphous carbons, and carbon materials of baked organic matters. These materials may be used singly or in combination of two or more. Among these materials, carbon materials of graphitized mesophase spheres, and graphite materials such as natural graphite and artificial graphite are preferable. The materials capable of forming an alloy with lithium indude silicon materials such as Si simple substance and compounds containing Si and O (e.g. SiOₓ). These materials may be used singly or by mixing two or more. By using silicon materials in the negative electrode active material, a high capacity can be achieved.
The negative electrode current collector is made of a metal foil such as a copper foil, for example.
As the separator, a polyethylene resin, a polypropylene resin, or a complex of these resins is used, for example. Heat-shrinking property of the separator can be improved by using ceramics or a heat-resistant resin in a part of the separator.

The case 2 indudes a prismatic battery housing portion 21 having a bottom, and a rectangular lid 22 covering an opening portion of the battery housing portion 21. The lid 22 is fixed to the battery housing portion 21 by welding. The case 2 is formed of a heat-conductive layer made of a metal having high heat conductivity (e.g. copper, aluminum). The entire inner surface of the case 2 is covered with a heat-absorbing layer 4 (case coating portion). In this manner, the heat-absorbing layer 4 and the case 2 (heat-conductive layer) constitute a composite layer. The heat-absorbing layer 4 can be adhered to the case 2 with an adhesive. The composite layer has a thickness of 0.2 to 4 mm, for example. The case has a thickness of 0.01 to 3 mm, for example. The heat-absorbing layer 4 has a thickness of 0.1 to 3 mm, for example.

Since the battery pack has a composite layer, even when the battery temperature increases greatly because of internal short-circuiting or overcharging of the batteries inside the battery pack, and the batteries emit a high-temperature inflammable gas to expose the inside of the battery pack to an abnormally high-temperature environment, the emitted heat of the inflammable gas is prevented from conducting intensively to the heat-conductive layer because the heat-absorbing layer is arranged at the periphery of the battery assembly. Also, since the heat-conductive layer is arranged at the periphery of the battery assembly, heat of the emitted inflammable gas can be diffused. Consequently, damage to the case by being exposed to an abnormally high-temperature environment and leakage of the inflammable gas to the outside of the battery pack caused thereby can be prevented, achieving improved safety of the battery pack.
By forming the battery pack with a composite layer of the heat-conductive layer and the heat-absorbing layer, the thickness of the case can be thinner than in the case of using the heat-conductive layer or the heat-absorbing layer singly, and a small and light battery pack can be obtained. By improving the heat resistance, the thickness of the case can be decreased to 1/3 to 1/2 of the case where the heat-conductive layer or the heat-absorbing layer is used singly.

The heat-absorbing layer 4 is formed of a resin induding a material B having a property of decomposing at 100°C or more and absorbing heat. When heat produced in the batteries is conducted to the heat-absorbing layer 4, the material B causes a heat decomposition reaction. In this occasion, the heat-absorbing layer 4 absorbs the heat produced in the batteries. The heat-absorbing layer 4 is expanded by gas produced along with the heat decomposition of the material B and becomes a heat-insulating layer. Thus, the influence of the heat over the electronic devices outside the case can be suppressed to minimum by the heat-absorbing layer 4.

It is preferable that the heat-absorbing layer 4 is formed of a resin layer in which a particulate material B having a particle diameter of 0.1 to 20 µm is dispersed. The material B is preferably at least one of sodium hydrogen carbonate (heat decomposition temperature: about 200°C) and aluminum hydroxide (heat decomposition temperature: about 400°C).
The material B in the heat-absorbing layer 4 has preferably a content of 20 to 70 parts by weight per 100 parts by weight of the resin. When the material B has a content of more than 70 parts by weight per 100 parts by weight of the resin, the proportion of the resin decreases excessively, and retention of the material B may be lowered in the resin layer. When the material B has a content of less than 20 parts by weight per 100 parts by weight of the resin, the proportion of the material B decreases excessively, rendering the above effect of the material B insufficient.
The resin layer is preferably a PTFE layer having an excellent binding property and heat resistance.

Heat-absorbing members in plate form (not illustrated) are arranged as partition plates between the adjacent batteries 3. The heat-absorbing members have a thickness of 0.1 to 1 mm, preferably 0.1 to 0.5 mm. As the heat-absorbing members, the same material as the heat-absorbing layer 4 is used.

The battery pack 1 has a mechanism for discharging a high-temperature inflammable gas emitted from the batteries to the outside of the battery pack 1. This mechanism includes an opening portion 23 arranged in the case 2, a check valve 24 arranged in the opening portion 23, and a conduit 25 communicating with the opening portion 23 for cooling and discharging the high-temperature gas outside. To be more specific, the battery housing portion 21 has an opening portion 23 for discharging the inflammable gas emitted from the batteries 3 to the outside of the battery pack 1. In the opening portion 23, the check valve 24 is arranged for preventing the air from flowing into the battery pack 1 from the opening portion 23 and also for preventing the discharged inflammable gas from flowing reversely. The conduit 25 having a plurality of bent portions is connected to the opening portion 23 by welding. Consequently, the high-temperature inflammable gas emitted from the battery pack 1 is air-cooled while passing through the conduit 25, and the cooled gas is discharged outside.

In view of cooling and discharging the inflammable gas, the conduit 25 has preferably a diameter of 3 to 10 mm. Although the conduit 25 of Fig. 2 has 5 bent portions, the number of the bent portions is not restricted thereto.
In view of cooling effect, the conduit having bent portions has preferably 1 to 5 bent portions and a length of 20 to 50 cm. More preferably, the number of the bent portions is 1 to 4. In case the conduit is excessively thin or long, or the conduit has too many bent portions, the gas cannot be discharged outside smoothly and the battery pack (case) may be damaged. In case the conduit is excessively thick or short, or the conduit has too few bent portions, the gas may not be cooled effectively.

A conduit 35 having a spiral structure as illustrated in Fig. 4 may be used in place of the conduit 25. In view of cooling and discharging the inflammable gas, the conduit 35 has preferably a diameter of 3 to 10 mm. Although the spiral of the conduit 35 of Fig. 4 has 3 winds, the number of the winds of the spiral is not limited thereto.
In view of cooling effect, it is preferable that the spiral conduit has preferably 1 to 5 winds and a length of 20 to 50 cm. In case the conduit is excessively thin or long, or the spiral has too many winds, the gas cannot be discharged outside smoothly and the battery pack (case) may be damaged. In case the conduit is excessively thick or short, or the spiral has too few winds, the gas may not be cooled effectively.

In the following, an example of production procedure of the battery pack 1 of Fig. 1 will be described.
By using an adhesive, a heat-absorbing layer 4 is adhered closely to portions becoming inner faces of the battery housing portion 21 and the lid 22 when constructing the case. An end portion of the conduit 25 is welded to the opening portion 23 of the battery housing portion 21. The battery assembly 31 is arranged inside the battery housing portion 21. The positive electrode terminal and the negative electrode terminal of the battery assembly 31 are connected to respective terminal portions of the battery housing portion. Partition plates are arranged between the adjacent batteries 3. The opening of the battery housing portion 21 is covered with the lid 22. The peripheral portion of the lid 22 is welded to an opening end portion of the battery housing portion 21.

In this embodiment, although the composite layer is formed by arranging the heat-absorbing layer on the inner faces of the case, the composite layer is not restricted thereto. The case may be formed of the heat-absorbing layer and the heat-conductive layer may be arranged on the inner faces of the case.
In this embodiment, although the whole inner faces of the case are covered with the heat-absorbing layer, only the faces facing the sealing portions of the batteries 3 (surfaces X and Y of Fig. 2) may be covered with the heat-absorbing layer.

### [Examples]

In the following, examples of the present invention will be described in detail, but the present invention is not limited to these examples.
Supposing the case where a battery in the battery pack had trouble and emitted a high-temperature inflammable gas to expose the inside of the battery pack to a high-temperature environment, following safety evaluation tests were carried out.

### «Example 1»

By using an epoxy resin-base adhesive (an UV-curable adhesive, trade name "OPTOCAST", manufactured by EMI), a PTFE sheet (VALQUALON sheet 7020, manufactured by Nippon Valqua Industries, Ltd.) (heat-absorbing layer) having a thickness of 0.2 mm was adhered, as a heat-resistant material, to one surface of an aluminum plate (A 1085) (heat-conductive layer) having a thickness of 0.3 mm, thereby obtaining a sample A (composite layer). The adhesive layer had a thickness of 0.7 mm.

### «Example 2»

A modified PPE sheet (DIANIUM MS-9002, manufactured by Mitsubishi Plastics, Inc.)(heat-absorbing layer) having a thickness of 0.2 mm was adhered, as a heat-resistant material, to one surface of an aluminum plate (heat-conductive layer) having a thickness of 0.3 mm in the same manner as in Example 1, thereby obtaining a sample B (composite layer).

### «Example 3»

As a heat-absorbing material, HEAT BUSTER TK2 manufactured by PDM Co., Ltd. was applied to whole one surface of an aluminum plate (heat-conductive layer) having a thickness of 0.3 mm to form a layer (heat-absorbing layer) having a thickness of 0.2 mm, thereby obtaining a sample C (composite layer).

### «Examples 4»

As a heat-absorbing material, 90 parts by weight of a powder of sodium hydrogen carbonate and 10 parts by weight of a powder of PTFE were kneaded in a mortar, which was then formed into a sheet form to obtain a formed body having a thickness of 0.2 mm. This formed body (heat-absorbing layer) was adhered to one surface of an aluminum plate having a thickness of 0.3 mm in the same manner as in Example 1, thereby obtaining a sample D (composite layer).

Supposing that a high-temperature gas spouted in the battery pack, heat at about 1,400°C was applied to the samples A to D for 30 seconds with a burner, and presence or absence of damaged portions in the samples A to D was verified.
Also, as comparative examples, a sample E (single layer) of an aluminum plate having a thickness of 0.5 mm, a sample F (single layer) of an aluminum plate having a thickness of 1.0 mm, a sample G (single layer) of a PTFE sheet having a thickness of 1.0 mm, and a sample H (single layer) of a modified PPE sheet having a thickness of 1.0 mm were prepared, and the same tests as above were carried out. The case where a part of the sample was melted to make a hole was judged as being damaged. The size of the samples A to G was set to 40 mm x 40 mm.
Results of the above tests are shown in Table 1.

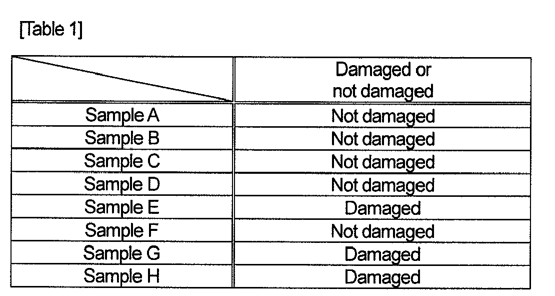

From the results of the above tests, although the sample E formed only of an aluminum plate having a thickness of 0.5 mm was damaged, the sample F formed only of an aluminum plate having a thickness of 1.0 mm was not damaged. This fact revealed that the aluminum plate should have a thickness of 1.0 mm in order to prevent damage by using only the aluminum plate.

In contrast, the samples A to D formed by applying or adhering the heat-resistant material or the heat-absorbing material to an aluminum plate having a thickness of 0.3 mm, which is thinner than the sample E, were not damaged. The reason that the aluminum plates having a thickness of 0.3 mm used in the samples A to D were not damaged was considered that heat conducted to the heat-resistant material or the heat-absorbing material so that the temperature of the aluminum plate was not increased to 660°C or more which is the melting temperature thereof. In the samples G and H, heat concentrated on portions subjected to the flame of the burner, and these portions had a high temperature and melted to make a hole, and therefore damaged.

### [Industrial Applicability]

The battery pack of the present invention is used as a power source for electronic devices such as personal computers and video cameras. Further, the battery pack is used as a power source for electric apparatuses loaded on vehicles such as four-wheeled and two-wheeled vehicles, or a power source for driving electric cars and hybrid cars.

## Claims

1. A battery pack comprising:
a battery assembly comprising a plurality of batteries having a sealing portion, said plurality of batteries being electrically connected to each other;
a terminal portion electrically connected to said battery assembly and outputting electric power; and
a composite layer structure induding a heat-absorbing layer and a heat-conductive layer layered on said heat-absorbing layer, said composite layer structure being arranged at least at a part of a periphery of said battery assembly,
wherein said heat-absorbing layer has a specific heat of 1,000 J/kg·°C or more, and
said heat-conductive layer has a heat conductivity of 10 W/m·K or more.

2. The battery pack in accordance with daim 1, wherein said composite layer structure is formed at least at a portion facing said sealing portion of each battery.

3. The battery pack in accordance with daim 1, wherein one of said heat-conductive layer and said heat-absorbing layer forms a case housing said battery assembly, and
the other one of said heat-conductive layer and said heat-absorbing layer forms a coating portion of said case at least at a portion facing said sealing portion of each battery.

4. The battery pack in accordance with daim 1, wherein said heat-absorbing layer indudes a resin material, ceramics, or an inorganic material having a specific heat of 1,000 J/kg·°C or more.

5. The battery pack in accordance with daim 4, wherein said resin material is a fluorocarbon resin, magnesium hydroxide-containing polypropylene resin, or modified polyphenylene ether resin.

6. The battery pack in accordance with daim 1, wherein said heat-absorbing layer indudes a material having a property of vaporizing at 80°C or more and absorbing heat by latent heat.

7. The battery pack in accordance with daim 6, wherein said material is butyl rubber or water-containing gel.

8. The battery pack in accordance with daim 1, wherein said heat-absorbing layer indudes a material having a property of decomposing at 100°C or more and absorbing heat.

9. The battery pack in accordance with daim 8, wherein said material is sodium hydrogen carbonate.

10. The battery pack in accordance with daim 1, wherein said heat-conductive layer comprises a metal.

11. The battery pack in accordance with daim 10, wherein said metal is copper or aluminum.

12. The battery pack in accordance with daim 1, further comprising a mechanism for discharging a high-temperature gas emitted from said battery outside of said battery pack,
wherein said mechanism comprises:
an opening portion arranged in said battery pack;
a check valve arranged in said opening portion; and
a conduit communicating with said opening portion for cooling and discharging said high-temperature gas outside.
